# EUROPÄISCHE PATENTSCHRIFT

(11) **EP 0 493 522 B1**
(45) Veröffentlichungstag und Bekanntmachung des Hinweises auf die Patenterteilung: **29.06.1994**
(21) Anmeldenummer: 90915428.8
(22) Anmeldetag: 21.09.1990
(51) Int. Cl.: G06K 7/06

(54) **CHIPKARTENLESER**
CHIP CARD READER
LECTEUR DE CARTE A PUCE

(30) Priorität: 21.09.1989 DE 3931508
(43) Veröffentlichungstag der Anmeldung: 08.07.1992
(73) Patentinhaber: AMPHENOL-TUCHEL ELECTRONICS GmbH, D-74080 Heilbronn (DE)
(72) Erfinder: BLEIER, Robert, D-7101 Untergruppenbach (DE); HÜBNER, Hans, Cünter, D-7100 Heilbronn (DE)
(74) Vertreter: Wagner, Karl H., Dipl.-Ing.
(86) Internationale Anmeldenummer: EP9001609
(87) Internationale Veröffentlichungsnummer: WO9104548

(56) Entgegenhaltungen:
- EP-A- 0 186 737
- EP-A- 0 214 478
- EP-A- 0 333 530
- EP-A- 0 351 103
- FR-A- 2 607 287
- PATENT ABSTRACTS OF JAPAN, vol. 9, no. 144 (P-365) 19 June 1985; & JP-A-60 022795

## Beschreibung

Die Erfindung bezieht sich auf einen Chipkartenleser, in den eine Chipkarte in Längsrichtung ein- und ausgegeben wird ("push-pull"-Betätigung). Die im Chipkartenleser vorhandenen Kontaktelemente, inbesondere Kontaktfedern sollen bei der Betätigung nur auf den Kontaktfeldern der Chipkarte zu liegen kommen, nicht aber über den Kunststoff der Chipkarte gleiten.

Aus der DE-OS 35 31 318 ist bereits ein Chipkartenleser bekannt, bei dem eine Chipkarte zu stationär im Gehäuse des Chipkartenlesers angeordneten Kontaktelemente hinbewegt wird. Allerdings arbeitet dieser Chipkartenleser nicht nach dem sogenannten Push-Pull-Prinzip, sondern es wird vielmehr eine Verriegelung beim Einschieben der Karte verwendet, die zum Zwecke der Entnahme der Karte gelöst werden muß.

Die vorliegende Erfindung bezieht sich aber, wie einleitend bereits erwähnt, auf einen Chipkartenleser, der Push-Pull-Bauart, wobei ferner, wie beim genannten Stand der Technik, die Kontaktelemente stationär im Gehäuse bzw. dem sogenannten Kontaktträger des Chipkartenlesers angeordnet sind.

Um zu erreichen, daß die zum Lesen der in dem Chip der Chipkarte enthaltenen Information verwendeten Kontaktelemente, die sogenannten Lesekontakte, nur im genormten Kontaktfeld der Chipkarte gleiten, nicht aber auf dem diese Kontaktfelder umgebenden Kunststoff der Karte, oder womöglich einem Massering, wird das Absenken der Chip-Karte gegen die Lesekontakte hin durch das Einstecken (push) der Karte bewirkt, und umgekehrt wird beim Herausziehen (pull) der Karte die Kontaktgabe in gleicher Weise ohne Berührung der Kunststoffoberfläche der Karte sichergestellt.

EP-A2-0 333 530 A2 beschreibt einen kastenförmigen Verbinder für Chipkarten, bei dem ein Kartenabnehmer durch die Karten aus einer Anfangs- oder Einsetzstellung in eine Lesestellung verschiebbar ist. Die FR-A-2 607 287 beschreibt ebenfalls einen Chipkartenleser, der auf einem Drehteil elektrische Kontakte trägt, die mit den Kartenkontakten in Berührung kommen können, wobei sich die Karte nur in Längsrichtung bewegt und eine mit einem nachgiebigen Stoff beschichtete, Schwenkbare Bremse vorgesehen ist.

Die vorliegende Erfindung geht aus von einem Chipkartenleser gemäß dem Oberbegriff des Anspruchs 1. Dieser Chipkartenleser kennzeichnet sich durch die im kennzeichnenden Teil des Anspruchs 1 genannten Merkmale. Bevorzugte Ausgestaltungen der Erfindung sind den Unteransprüchen zu entnehmen.

In einzelnen sieht die Erfindung einen Kontaktträger vor, in dem die Lesekontakte und noch zu erläuternde Schaltkontakte stationär angeordnet sind, so daß das Anbringen dieser Kontakte als Lötkontakte durch Einlöten des Kontaktträgers in eine gedruckte Schaltung erfolgen kann. Die Kontaktelemente müssen natürlich nicht notwendigerweise Lötkontakte sein. In dem Kontaktträger ist erfindungsgemäß eine Kartenaufnahme, welche zur Aufnahme der Chipkarte dient, in Steckrichtung hin - und her verschiebbar gelagert. Vorzugsweise ist die Kartenaufnahme innerhalb des Kontaktträgers nicht nur längs-, sondern auch höhenverschiebbar gelagert, wobei die Kartenaufnahme einen Kartenschlitz bildende Elemente für die Aufnahme und Führung der Karte besitzt.

Die Kartenaufnahme wird durch eine Rückholfeder in einer Ein/Ausgabestellung gehalten. Aus dieser Ein/Ausgabestellung kann die Kartenaufnahme beim Einschieben der Chipkarte in die Lesestellung verschoben werden. Bei diesem Steckvorgang wird die Kartenaufnahme von der Karte mitgenommen und bewegt sich beispielsweise unter 120° gegen den Kontaktträger, wobei die Lesekontakte im Kontaktfeld der Chipkarte aufsetzen und dort bis zum Endanschlag innerhalb des Kontaktfeldes gleiten.

Erfindungsgemäß ist ferner im Kontaktträger eine Kartenbremse integriert, welche die Chipkarte zusammen mit der Kartenaufnahme entgegen der Kraft der Rückholfeder in der Lesestellung hält. Gemäß einer besonderen Ausgestaltung der Erfindung ist die Kartenbremse eine Metallklammer, die derart drehbar am Kontaktträger gelagert ist, daß sie dadurch der Absenkbewegung der Chipkarte folgen kann. Beim Herausziehen der Karte muß dann die Haltekraft der die Rückholfeder bildenden Metallklammer überwunden werden. Die Kartenaufnahme erfolgt auf Grund der Rückholfeder der Chipkarte und geht, der Absenkkurve folgend, in die Ein/Ausgabestellung zurück.

Gemäß einer weiteren Ausgestaltung der Erfindung enthält, wie oben angedeutet, der aus Kontaktelementen gebildete Kontaktsatz nicht nur Lesekontakte, sondern darüber hinaus mindestens zwei Schaltkontakte, die von einem am Kontaktträger angeformten federnden Schaltarm betätigt werden. Dieser federnde Schaltarm wird durch die Chipkarte selbst dann zur Betätigung der Schaltkontakte ausgelenkt, wenn die Lesekontakte bereits geschlossen sind.

Gemäß einer weiteren Ausgestaltung der Erfindung sind die Lesekontakte und auch die Schaltkontakte vorgespannt. Diese vorgespannten Kontaktfedern bewirken, daß bei dem kleinen verfügbaren Federweg die geforderte Kontaktkraft ansteht. Wegen der flachen Federkennlinie beeinflußt die Dickentoleranz der Karte die Kontaktkraft nicht in unzulässiger Weise.

Bevorzugte Ausgestaltungen der Erfindung ergeben sich insbesondere aus den Ansprüchen sowie aus der folgenden Beschreibung von Ausführungsbeispielen.

Weitere Vorteile, Ziele und Einzelheiten der Erfindung ergeben sich aus der Beschreibung von Ausführungsbeispielen anhand der Zeichnung; in der Zeichnung zeigt:
- Fig. 1: schematisch einen Chipkartenleser in seiner Arbeitsumgebung;
- Fig. 2: eine perspektivische Ansicht schräg von oben auf die beiden Hauptkomponenten (Kontaktträger und Kartenaufnahme) des Chipkartenlesers sowie der Karte;
- Fig. 3: eine Ansicht der in Fig. 2 vorne liegenden Seite des Kontaktträgers;
- Fig. 4: eine Draufsicht auf den Kontaktträger, wobei die Kartenaufnahme gestrichelt angedeutet ist;
- Fig. 5: eine schematische Schnittansicht durch den Chipkartenleser in seiner Ein/Ausgabestellung;
- Fig. 6: eine Ansicht ähnlich Fig. 5, wobei hier der Kartenaufnehmer bereits in Richtung auf die Lesestellung verschoben ist und gerade mit seiner Absenkbewegung beginnt;
- Fig. 7: eine Ansicht ähnlich Fig. 5, wobei sich hier die Kartenaufnahme der Lesestellung weiter angenähert hat und die Kontaktflächen der Chipkarte gerade mit den Lesekontakten in Berührung kommen;
- Fig. 8: eine Ansicht ähnlich Fig. 5, wobei sich hier die Kartenaufnahme in ihrer End- oder Lesestellung befindet, wobei dargestellt ist, daß die Kontaktflächen noch immer in Berührung mit den Lesekontakten stehen, ferner aber die beiden Schaltkontakte jetzt geschlossen sind;
- Fig. 9: einen Schnitt parallel zur Längsachse durch den Kontaktträger im Bereich der Lesekontakte, wobei hier die Form der Lesekontakte wie auch deren Einsetzen unter Vorspannung dargestellt ist;
- Fig.10: eine Einzelheit der Fig. 4 im Bereich der Befestigungsmittel für die Kartenbremse;
- Fig.11: eine Draufsicht auf die die Kartenbremse bildende Metallklammer;
- Fig.12: eine Seitenansicht der Metallklammer gemäß Fig. 11;
- Fig.13: eine schematische Teilansicht des Kontaktträgers von unten, und zwar im Bereich eines Schaltarms für die Schaltkontakte;
- Fig.14: einen Schnitt längs Linie 14-14 in Fig. 13 bei nicht eingesetztem Schaltkontakt;
- Fig.15: eine vergrößerte Darstellung des einen Schaltnocken bildenden freien Endes des Schaltarms.

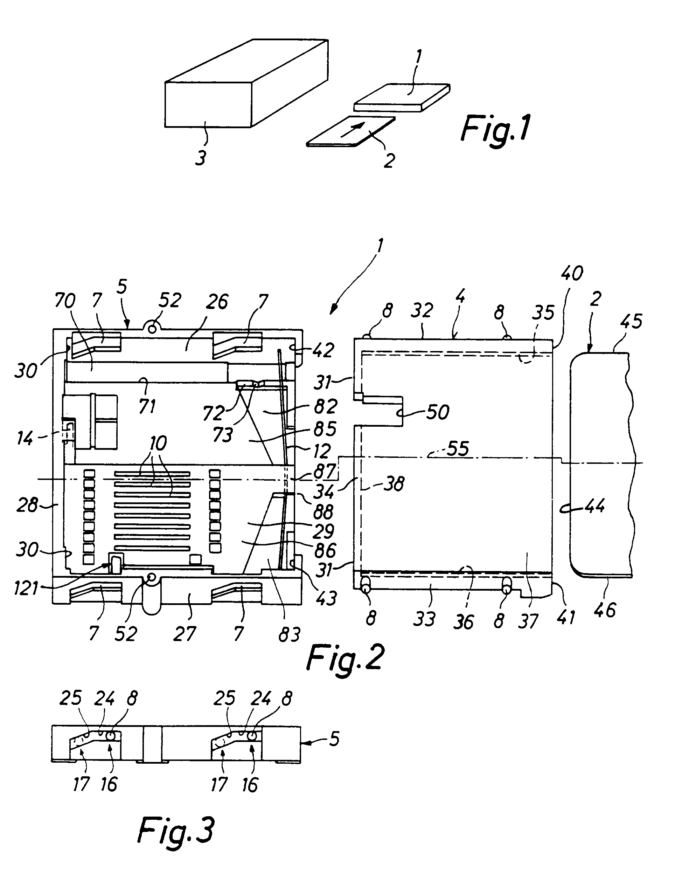

Fig. 1 zeigt einen Chipkartenleser 1, in den eine Chipkarte 2 eingeschoben werden kann, um die im Chip der Chipkarte 2 enthaltenen Daten zu lesen oder gegebenenfalls auch zu ändern und ergänzen. Der Chipkartenleser 1 wird üblicherweise zusammen mit einem Gerät 3, beispielsweise einem Telefongerät, benutzt. Zu diesem Zweck wird der Chipkartenleser 1 häufig in das Gerät 3, bzw. Komponenten des Geräts 3, eingebaut. Die im Chipkartenleser 1 zur Kontaktierung der Kontaktflächen der Chipkarte 2 vorhandenen Kontaktelemente stehen dann häufig, beispielsweise über ein Flachkabel, mit den entsprechenden Bauteilen des Geräts 3 in Verbindung. Vorzugsweise bezieht sich die vorliegende Erfindung auf einen Chipkartenleser 1, bei dem die Kontaktelemente stationär angeordnet sind und die mit ihren Anschlußenden vorzugsweise in eine im Gerät 3 vorhandene gedruckte Schaltung eingelötet sind.

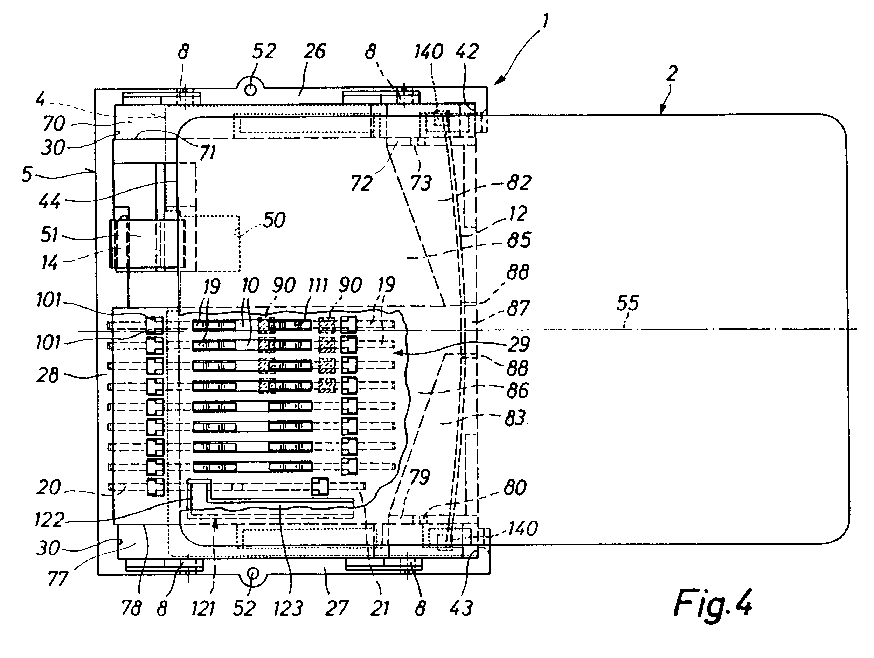

Die Fig. 2 und 3 zeigen zunächst den allgemeinen Aufbau des erfindungsgemäßen Chipkartenlesers 1, der zwei Hauptteile, nämlich eine Kartenaufnahme 4 und einen Kontaktträger 5 umfaßt. Die Kartenaufnahme 4 ist - wie in Fig. 4 gezeigt - im Kontaktträger 5 in Richtung einer Längsachse 55 hin- und herbewegbar durch Lager- oder Führungsmittel gelagert bzw. geführt. Diese Führungsmittel werden durch kontaktträgerseitige Führungsmittel 7 in der Form von Schlitzen 7 und durch kartenaufnahmeseitige Führungsmittel 8 in der Form von Zapfen 8 gebildet. Dadurch, daß der Kontaktträger 5 (und auch die Kartenaufnahme 4) aus Kunststoff hergestellt sind, können nach Einsetzen der in Fig. 2 unteren Zapfen 8 in die zugehörigen Schlitze 7 die oberen Zapfen 8 in die zugehörigen Schlitze 7 eingeschnappt werden.

Im Kontaktträger 5 sind, wie der Name andeutet, Kontaktelemente, vorzugsweise in der Form von Kontaktfedern, untergebracht; die zur Aufnahme dieser Kontaktfedern vorgesehenen Aufnahmeschlitze sind mit 10 bezeichnet.

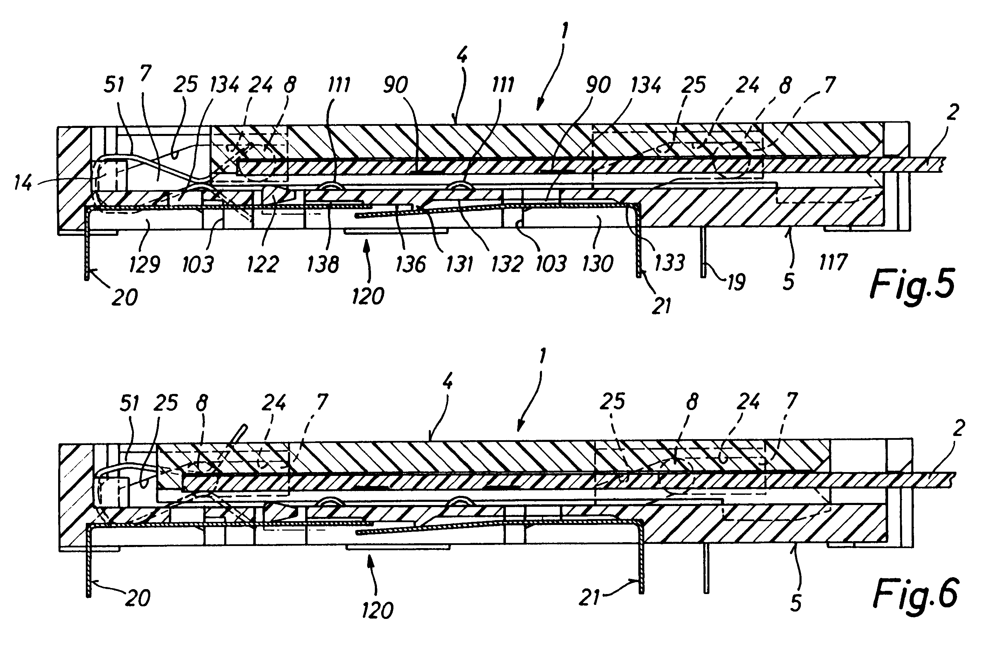

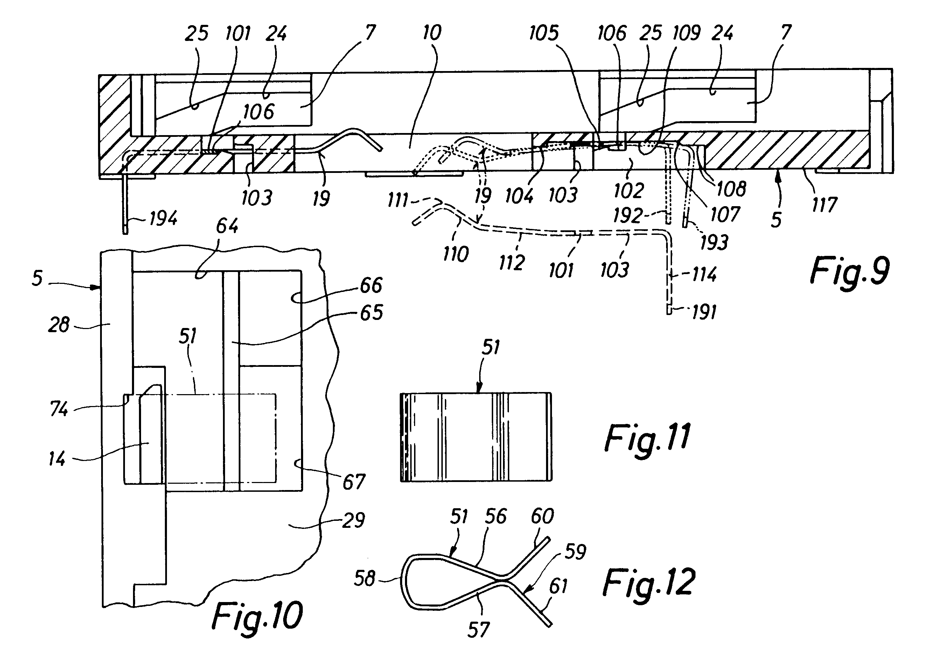

Die Hin- und Herbewegung der Kartenaufnahme 4 erfolgt zwischen einer auch als Ruhestellung bezeichneten Karten-Ein/Ausgabestellung 16 und einer Lesestellung 17. Die Ruhestellung 16 und die Lesestellung 17 sind in Fig. 3 schematisch durch die Stellung der Zapfen 8 dargestellt und im einzelnen ist die Ruhestellung in Fig. 5 und die Lesestellung in Fig. 8 veranschaulicht. Eine Feder 12 drückt die Kartenaufnahme 4 bei nicht eingesetzter Karte 2 in die Ruhestellung 16.

In den bereits erwähnten Kontaktfederaufnahmeschlitzen 10 sitzen (wie im einzelnen in Fig. 4 gezeigt) Lesekontaktfedern (Lesekontakte) 19 und Schaltkontaktfedern (Schaltkontakte) 20 und 21. Im Ausführungsbeispiel gemäß Fig. 4 sind 16 Lesekontakte 19 sowie zwei Schaltkontakte, nämlich ein erster Schaltkontakt 20 und ein zweiter Schaltkontakt 21, vorgesehen.

Der Kontaktträger wird durch eine Bodenwand 29 gebildet, von der aus eine erste Seitenwand 26, eine zweite Seitenwand 27 und eine die Wände 26 und 27 verbindende Rückwand 28 nach oben ragen. Die Rückwand 28 bildet Anschlagflächen 30 für entsprechende Anschlagflächen 31 der Kontaktaufnahme 4. An der Rückwand 28 sind ferner Befestigungsmittel in der Form eines Zapfens 14 für eine noch zu beschreibende Kartenbremse 51 vorgesehen.

Die kontakträgerseitigen Führungsmittel 7 weisen jeweils, wie in Fig. 3 gezeigt, einen waagerechten Schlitzteil 24 und daran anschließend einen schrägen Schlitzteil (Absenkkurve) 25 auf. Es sei hier bereits darauf hingewiesen, daß man in Fig. 3 erkennt, daß die Lesestellung 17 erreicht wird, wo sich die Zapfen 8 noch immer im Bereich der Absenkkurve 25 befinden.

In Fig. 2 ist ferner dargestellt, daß von den Seitenwänden 26, 27 aus, rechtwinklig abgewinkelt Arme vorstehen, welche Anlageflächen 42 bzw. 43 bilden, die mit entsprechenden Anlagekanten 40, 41 der Kartenaufnahme 4 durch die Kraft der Feder 12 zur Anlage kommen, wenn sich die Kartenaufnahme 4 in ihrer Ruhestellung befindet.

Bevor die Beschreibung des Kontaktträgers 5 unter Bezugnahme auf Fig. 4 fortgesetzt wird, sei noch unter Hinweis auf Fig. 2 kurz erwähnt, daß die Kartenaufnahme 4 durch eine Deckwand 37 gebildet wird, von der aus (in Fig. 2) nach unten ragende Wände ausgebildet sind: eine erste Seitenwand 32, eine zweite Seitenwand 33 und eine Rückwand 34. Von den Seitenwänden 32 und 33 ragen unter Bildung eines Schlitzes für die Aufnahme der Karte 2 kurze Stege parallel zur Deckwand 37 nach innen und bilden so für die Seitenkanten 45, 46 der Karte 2 Führungsbahnen 35 und 36. Die Rückwand 34 bildet eine Anlagefläche oder Anlagekante 38 für die vordere oder Anlagekante 44 der Karte 2. Ein Ausschnitt 50 in der Deckwand 37 sieht Raum für die als Bremsfeder 51 ausgebildete Kartenbremse vor.

Unter Bezugnahme auf die Fig. 4 sei nun noch die Beschreibung des Kontaktträgers 5 vervollständigt, der auf dem Zapfen 14 die Kartenbremse in der Form der Bremsfeder 51 trägt. Befestigungsmittel 52 dienen zur Befestigung an einem Bauteil, beispielsweise einer gedruckten Schaltung des Geräts 3. Zunächst erkennt man benachbart zu der ersten Seitenwand 26 eine erste rinnenförmige Vertiefung (Rinne) in der Bodenwand 29. Benachbart zur zweiten Seitenwand 27 ist eine zweite Rinne 77 ausgebildet. Eine Kante 71 begrenzt die erste Rinne 70 und setzt sich in einem Steg 72 fort, in dem ein V-förmiger Ausschnitt 73 (in die Zeichenebene hineinverlaufend) ausgebildet ist. Symmetrisch dazu wird die zweite Rinne 77 von einer Kante 78 begrenzt, die in einen Steg 79 mit einem V-förmigen Ausschnitt 80 übergeht. Eine Fläche 85 liegt höher als der Boden der Rinne 70, aber vertieft gegenüber der Fläche 85 ist eine Vertiefung 82 vorgesehen, die in etwa auf der gleichen Höhe liegt wie eine weitere Vertiefung 83, die gegenüber der Kontaktaufnahmefläche 86 vertieft angeordnet ist. Die Kontaktaufnahmefläche 86 ihrerseits liegt aber auch höher als die Fläche 85. Die Kontaktaufnahmefläche 76 bildet eine Federhalterung in der Form eines Vorsprungs, der durch zwei symmetrisch angeordnete Schlitze 88 das Einsetzen der Feder 12 gestattet. Die Feder 12 kann aus der in Fig. 4 gezeigten Position heraus nach links bei Bewegung der Kartenaufnahme in ihrer Leseposition auf den Stegen gleiten und erreicht die Ausschnitte 73, 80 dann, wenn der Aufnehmer 4 die Leseposition erreicht hat. Die Feder 12 ist in ihrem Ruhezustand vorzugsweise ein gerader Federdraht.

In den Fig. 5 bis 8 sowie 10 bis 12 ist die erfindungsgemäße Kartenbremse 51 in der Form einer Bremsfeder und speziell in der Form einer Metallklammer dargestellt. Die Fig. 11 zeigt eine Draufsicht auf die Bremsfedern 51 und Fig. 12 zeigt, daß die durch eine Metallklammer gebildete Bremsfeder 51 einen ersten Schenkel 56, einen zweiten Schenkel 57 und einen diese beiden Schenkel verbindenden Verbindungsteil 58 aufweist. Die von den Schenkeln 56, 57, 58 gebildete Öffnung ist derart geformt, daß die Feder 51 auf den Zapfen 14 aufsetzbar ist, und zwar in der Weise, daß sich die Feder, wie in den Fig. 5 bis 8 dargestellt, um den Zapfen 14 verschwenken kann, aber in dieser begrenzten Drehbarkeit praktisch spielfrei gelagert ist. Die Bremsfeder 51 ist in ihrer Ruhestellung, wie in Fig. 12 gezeigt, mit ihren beiden Schenkeln 56, 57 zusammengedrückt, bildet aber einen Schnabel 59, bestehend aus einem ersten Schnabelteil 60 und einem zweiten Schnabelteil 61. Der Schnabel 59 ist in der Ruhestellung der Feder 51, wie gezeigt, aufgespreizt, um so einen Fangbereich für das Einfangen der einzuschiebenden Chipkarte 2 zu bilden.

Zur Anordnung der Bremsfeder 51 am Kontaktträger 5 sei noch auf Fig. 10 Bezug genommen, wo dargestellt ist, daß in der Bodenwand 29, benachbart zur Rückwand 28, eine Vertiefung 64 gegenüber der Fläche 85 vorgesehen ist, wobei diese Vertiefung in Fig. 10 rechts durch einen Steg 65 begrenzt wird, an dessen rechter oberer Seite eine auf gleichem Niveau wie die Vertiefung 64 liegende Vertiefung 66 sich befindet, während benachbart dazu (nach unten) im Bereich der einzusetzenden Bremsfeder 51 ein Loch 67 ausgebildet ist, welches Platz für das zweite Schnabelteil 61 bei eingesetzter Feder 51 vorsieht.

Die Bremsfeder 51 wird üblicherweise in Fig. 10 von oben her auf den Zapfen 14 aufgeschoben und sitzt dann mit dem Verbindungsteil 58 in einer Ausnehmung 74 (Fig. 10) der Rückwand 28, so daß zwar eine begrenzte Drehbewegung, nicht aber eine Bewegung senkrecht zur Längsachse 55 oder in Richtung der Längsachse 55 möglich ist.

Unter Bezugnahme auf die Fig. 5 bis 8 sowie Fig. 9 sei nunmehr auf die Ausbildung der Lesekontakte 19 und Schaltkontakte 20, 21 eingegangen. In Fig. 9 ist links ein fertigmontierter Lesekontakt 19 dargestellt. Der fertigmontierte Lesekontakt 19 ist vorgespannt, so daß bei dem kleinen verfügbaren Federweg die geforderte Kontaktkraft zwischen dem Lesekontakt und der schematisch in Fig. 4 bei 90 gezeigten Kontaktflächen der Karte 2 ansteht. Wegen der flachen Federkennlinie beeinflußt die Dickentoleranz der Karte 2 die Kontaktkraft nicht unzulässig. Rechts unten in Fig. 9 ist ein erfindungsgemäßer Lesekontakt 19 in seiner noch nicht eingebauten Form dargestellt. Diese Nichteinbaustellung ist mit 191 bezeichnet, der nächste Schritt ist mit 192, der wiederum nächste mit 193 und die eingebaute Stellung ist mit 194 bezeichnet.

Jeder Lesekontakt 19 besitzt einen eine Kontaktkuppe 111 aufweisenden Kuppenteil 110 am einen freien Ende der Kontaktfeder 19. Daran anschließend ist ein erster geradliniger Teil 112 sowie ein zweiter geradliniger Teil 113 vorgesehen, der in einen um 90° abgewinkelten Anschlußteil 14 übergeht. Die beiden geradlinigen Teile 112, 113 bilden einen Winkel von etwas weniger als 180°, was zur Folge hat, daß dann, wenn dieser Kontakt 19, wie links in Fig. 9 dargestellt, eingebaut ist, die beiden geradlinigen Teile 112, 113 auf einer Linie liegen, so daß sich eine Vorspannung für den Kontakt 19 ergibt. Am Übergang vom ersten geradlinigen Teil 112 in den zweiten geradlinigen Teil 113 sind am Kontakt 19 gegenüberliegend Stege 101 beim Herausstanzen des Kontaktelements 19 mitausgebildet. Der eine Steg verläuft also in die Zeichenebene hinein und der andere erstreckt sich aus dieser heraus. Diese Stege 101 dienen zur Verrastung am Kontaktträger 5.

Um das Haltern und Einrasten der Lesekontakte 19 am Kontaktträger 5 zu ermöglichen, sind die Kontaktfederaufnahmeschlitze 10 wie folgt ausgestaltet. Jeder Aufnahmeschlitz 10 bildet eine Einsetzkammer 102, die quer zur Längsachse eine in etwa der Breite des Lesekontakts 19 entsprechende Breite aufweist. Um die nach beiden Seiten wegragenden Stege 101 einsetzen zu können, ist eine Schlitzverbreiterung 103 vorgesehen. Die Position 192 des Lesekontakts 19 veranschaulicht den Zustand unmittelbar nach dem Einsetzen des Lesekontaktes in die Kammer 102, wo der Lesekontakt 19 bereits zur Anlage auf einem Anlagesteg 4 sowie dem Kammerboden 109 kommt. Alsdann wird der Lesekontakt 19 in Fig. 9 nach rechts in die mit 193 bezeichnete Stellung bewegt, und gleitet dabei auf einer Rampe 105 nach oben, um schließlich, was dann in Fig. 9 links dargestellt ist, in einen Rastsitz 106, gebildet durch eine Vertiefung, zu fallen. Bei dieser Bewegung läuft das rechte Ende des geradlinigen Teils 113 über eine Rampenfläche 107 auf eine Sitzfläche 108 derart, daß der Kontakt in der mit 194 bezeichneten Position vorgespannt ist.

Insbesondere unter Bezugnahme auf die Fig. 5 bis 8 sowie 13 bis 15 sei der erfindungsgemäße Endlagenschalter 120 erläutert, der im dargestellten Ausführungsbeispiel aus dem ersten Schaltkontakt 20, dem zweiten Schaltkontakt 21 und dem Schalterbetätigungselement in der Form eines Schaltarms 21 besteht.

Der Endlagenschalter 120 liefert durch sein Schließen die Information, daß sich die Kartenaufnahme 4 in ihrer Lesestellung, d. h. in ihrer Endlage, befindet, in der sie durch die Kartenbremse 51 gehalten wird. Obwohl dies nicht dargestellt ist, könnte die Information hinsichtlich der Endlage auch dadurch gegeben werden, daß man normalerweise geschlossene Schaltkontakte öffnet.

Die Schaltkontakte 20 und 21 sind am besten in den Fig. 5 bis 8 zu erkennen. Sie haben den gleichen Aufbau und sie sind ferner ähnlich wie die Lesekontakte 19 aufgebaut mit der Ausnahme, daß kein Kuppenteil 110 vorhanden ist, sondern daß sich der geradlinige Teil 112 auch im Bereich des Kuppenteils erstreckt. Alle Schaltkontakte 20, 21 sind im eingebauten Zustand vorgespannt, und zwar in Richtung von der Unterseite 117 des Kontaktträgers weg (vgl. Fig. 5).

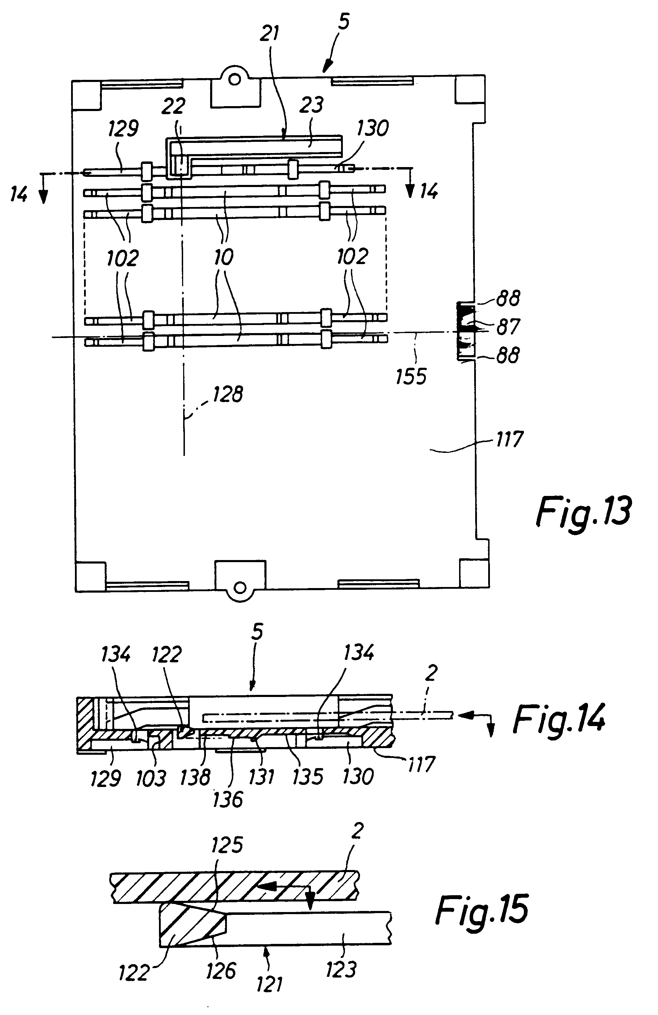

Zu beiden Seiten - vgl. Fig. 13 - einer senkrecht zur Mittellinie 55 verlaufenden Linie 128 sind von der Unterseite 117 des Kontaktträgers 5 her Einsetzkammern 129 und 130 vorgesehen. Die Einsetzkammer 129 gleicht im wesentlichen der Einsetzkammer 102 für einen Lesekontakt. Die Einsetzkammer 130 ist im einzelnen in den Fig. 5 bis 8 und in Fig. 14 dargestellt. Im einzelnen weist die Einsetzkammer 130 eine Schlitzverbreiterung 103 für den Durchgang der Stege des Schaltkontakts auf. Ferner wird am Boden des Schlitzes eine Ausnehmung 138 gebildet, die als Auflage für das freie Ende des in Kammer 129 angeordneten Schaltkontakts 20 dient. Etwas höher als die durch Ausnehmung 138 gebildete Auflagefläche liegt eine Auflagefläche 36, an die anschließend eine Nase 131 ausgebildet ist, welche über eine Rampenfläche in den Kammerboden 135 übergeht. Eine Rastausnehmung 134 dient zur Aufnahme der beiden Stege des Schaltkontakts 21. Der Schaltkontakt 21 sitzt also vorgepannt in der in Fig. 5 gezeigten Endposition. In den Fig. 5 bis 8 erkennt man ferner, daß der Schaltkontakt 20 in seinem freien Ende oberhalb des freien Endes des Schaltkontakts 21 liegt (Fig. 5), um durch einen am Schaltarm 21 ausgebildeten Schaltnocken 22 in die in Fig. 8 gezeigte Schließstellung gebracht zu werden.

Es sei nunmehr noch der Schaltarm 21 des Endlagenschalters 120 im einzelnen beschrieben. Der Schaltarm 21 ist einstückig, vorzugsweise durch Spritzguß, mit dem Kontaktträger 5 hergestellt und weist einen verhältnismäßig langen Hebelarm 23 auf, an dessen freiem Ende der Schaltnocken 22 ausgebildet ist. Die Anordnungen und Ausbildung des Schaltarm 121 erkennt man am besten in den Fig. 4, 5 bis 8 sowie 13 und 15. Der Schaltnokken 122 bildet eine Kartenbetätigungsfläche 125 sowie abgewinkelt dazu eine Kontaktbetätigungsfläche 126. Der Nocken 122 ist im ganzen keilförmig ausgebildet.

Es sei nunmehr auf die Arbeitsweise des erfindungsgemäßen Chipkartenlesers 1 eingegangen. Im nicht benutzten oder Ruhezustand ist die Kartenaufnahme 4, wie in den Fig. 4 und 5 gezeigt, durch die Feder 12 gegen die Anlageflächen 42 und 43 gedrückt. Die Feder 12 ist im Zustand gemäß Fig. 4 vorgespannt und überträgt ihre Kraft auf die Kartenaufnahme 4 über an der Kartenaufnahme 4 ausgebildete Mitnehmer 40, die jeweils in der Form von Schlitzen ausgebildet sind, in denen die freien Enden der Feder 12 sitzen. Wird nun die Chipkarte 2 von rechts her in die von der Kartenaufnahme 4 gebildeten und in Fig. 2 angedeuteten schlitzförmigen Führungsbahnen 35 und 36 eingesetzt, so gleitet die Karte entlang dieser Führungsbahnen, bis sie schließlich mit ihrer Anlagekante 44 an der Anlagekante 38 der Kartenaufnahme 4 zur Anlage kommt und bei weiterer auf die Karte 2 ausgeübten Einschubkraft (push) die Kartenaufnahme 4 mitnimmt, wobei sich diese entsprechend den Führungsmitteln zusammen mit der Karte 2 entsprechend der Darstellung in den Fig. 5 bis 8 nach unten bewegt. Die Bremsfeder 51 ist wie in Fig. 4 und 5 gezeigt, so angeordnet, daß die Karte bereits in den Einfangbereich dann kommt, wenn sie an der Anlagekante 38 der Kartenaufnahme 4 anstößt. Bei der weiteren Bewegung drückt dann die Karte 2 die beiden Schenkel der Feder 51 auseinander, so daß diese eine Klemm- und Haltekraft auf die Karte ausüben, die aber zunächst durch die fortgesetzte Einschubbewegung überwunden wird. Erst wenn die Karte 2 die in Fig. 8 gezeigte Position erreicht hat, wird nach Freigabe der Karte 2 diese allein durch die Feder 51 in der Leseposition gehalten, und zwar zusammen mit der die Karte 2 führenden Kartenaufnahme, die noch immer unter der Wirkung der Kraft der Feder 12 steht, welche aber durch die Bremskraft der Feder 51 eine Verschiebung der Karte und der Kartenaufnahme 4 aus der Lesestellung heraus nicht bewirken kann.

Die in den Fig. 5 bis 8 veranschaulichte Absenkbewegung der Kartenaufnahme 4 zusammen mit der Karte 2 wird durch die Führungsmittel 7, 8 bewirkt, und zwar insbesondere durch die vom schrägen Schlitzteil 25 gebildete Absenkkurve. Es ist zu beachten, daß erfindungsgemäß die Leseposition gemäß Fig. 8 noch im Bereich der schrägen Schlitzteile 25 erreicht wird, d. h. der schräge Schlitzteil geht in Einsetzrichtung der Karte 2 nicht wieder in einen waagerechten Schlitzteil über.

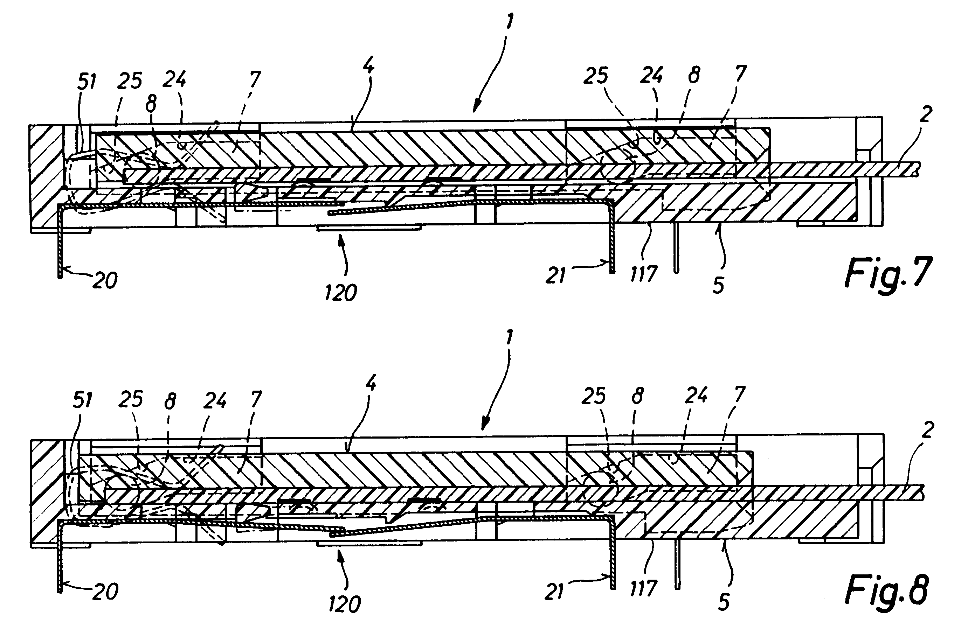

In Fig. 7 erkennt man, daß im Verlauf der Einschub- und Absenkbewegung der Karte 2 und der Kartenaufnahme 4 der Anfangsbereich der Kontaktzonen 90 mit den Kontaktkuppen 111 der Kartenkontakte 19 in Eingriff kommt und daß die endgültige Kontaktgabe gemäß Fig. 8, die auch das Schließen des Endschalters 129 zur Folge hat, gut innerhalb des Toleranzbereiches der Kontaktflächen 90 erfolgt.

Bei Betrachtung der Fig. 5 bis 8 erkennt man ferner, daß die Bremsfeder 51 eine begrenzte Drehbewegung ausführt, zuerst (Fig. 6) nach oben und dann langsam über Fig. 6 zurück zu der in Fig. 8 gezeigten Ausgangsstellung.

Zur Betätigung des Endlagenschalters sei noch auf die Fig. 5 bis 8 sowie 14 und 15 hingewiesen, wo man erkennen kann, wie die Karte 2 auf die Kartenbetätigungsfläche 25 aufläuft und den Schaltnocken gemäß Fig. 8 soweit verschwenkt, daß die beiden Schaltkontakte 20, 21 einander berühren.

Der erfindungsgemäße Chipkartenleser 1 arbeitet nach dem sogenannten Push-Pull-Prinzip und in Fig. 8 ist nach Beendigung des "Push"-Vorgangs auf die Karte erreichte Lesestellung gezeigt. Aus dieser Lesestellung gemäß Fig. 8 wird die Karte 2 durch den Zieh- oder "Pull"-Vorgang entfernt. Der Benutzer zieht an dem in Fig. 8 rechts herausstehenden Ende der Karte 2, wodurch die Bremskraft der Bremsfeder 51 überwunden wird. Wenn bei fortgesetztem Ziehen an der Karte diese schlußendlich von der zwischen den beiden Schenkeln ausgeübten Klemmkraft frei kommt, kehrt insbesondere durch die Wirkung der Feder 12 die Kartenaufnahme 4 in ihre Ruhestellung 16 zurück und die Karte 2 selbst kann leicht aus der Kartenaufnahme 4 herausgezogen werden.

Zusammenfassend sieht die Erfindung einen Chipkartenleser 1 vor, der einen mehrere Kontakte aufweisenden Kontaktsatz besitzt, der vorzugsweise mit einer Leiterplatte mechanisch und elektrisch verbunden ist. Der Kontaktsatz wird von einem Kontaktträger 5 getragen, in dem die Kartenaufnahme 4 längs- und höhenverschiebbar gelagert ist. Die Kartenaufnahme hat zur Aufnahme und Führung der Chipkarte 2 Elemente, die einen Kartenschlitz bilden. Vorzugsweise mittels vier Zapfen wird die Kartenaufnahme 4 in Schlitzen bzw. Nuten, und zwar vorzugsweise schrägen Nuten des Kontaktträgers 5 geführt. Beim Steckvorgang wird die Kartenaufnahme 4 von der Chipkarte 2 mitgenommen und bewegt sich vorzugsweise unter einem Winkel von etwa 20° gegen den Kontaktträger 5. Die Lesekontakte 19 setzen dabei im von den Kontaktflächen 90 gebildeten Kontaktfeld der Karte 2 auf und gleiten dort bis zum Endanschlag innerhalb der jeweiligen Kontaktflächen 90 des Kontaktfeldes. Der Kontaktsatz enthält neben den Lesekontakten 19 zwei Schaltkontakte 20, 21 die den Endlagenschalter bilden. Einer der Schaltkontakte wird von dem am Kontaktträger 4 angeformten federnden Schaltarm betätigt. Die Auslenkung des Schaltarms 121 erfolgt durch die Karte 2, nachdem die Lesekontakte 19 geschlossen sind. Die im Kontaktträger 5 integrierte Bremse hält die Karte zusammen mit der Kartenaufnahme 4 entgegen der Kraft der Rückholfeder 12 in Lesestellung.

Das Absenken der Karte gegen die Lesekontakte durch das Stecken der Karte wird durch die Kartenaufnahme erreicht, die im Kontakträger in Steckrichtung und gegen den Kontaktträger verschiebbar gelagert ist. Die Rückholfedeer für die Kartenaufnahme 4 ist vorzugsweise ein gerader Federdraht 12, der zwischen Kontaktträger und Kartenaufnahme gespannt ist.

Die erfindungsgemäße Kartenbremse verhält sich kräfteneutral, beeinflußt also weder Schalt- noch Lesekontakt bzw. die Schaltfolge.

## Patentansprüche

1. Chipkartenleser (1) mit einem Kontaktträger (5) sowie einer Kartenaufnahme (4), die im Kontaktträger (5) derart hin- und herbeweglich gelagert ist, daß beim Einsetzen einer Chipkarte (2) in die Kartenaufnahme (4) diese zusammen mit der Karte (2) zu den im Kontaktträger vorhandenen Kontakten hin bewegt abgesenkt bzw. angehoben wird, und mit einer Kartenbremse (51), welche unmittelbar mit der Karte in Eingriff kommt und diese in der Lesestellung hält, dadurch gekennzeichnet, daß die Bremse am Kontaktträger derart beweglich insbesondere schwenkbar gelagert ist, daß sie der Bewegung der Chipkarte (2) folgt, damit die Chipkarte (2) nicht aus ihrer Lage bezüglich der Kontakte herausgedrückt wird.

2. Chipkartenleser (1) nach Anspruch 1, dadurch gekennzeichnet, daß dieser nach dem Push-Pull-Prinzip genauer dem Push-Pull-Verweil-Prinzip arbeitet.

3. Chipkartenleser nach Anspruch 1 oder 2, dadurch gekennzeichnet, daß die zu den feststehenden Kontakten im Kontaktträger hin bewegte Karte (2) die Lesestellung erreicht, während die Karte zusammen mit der Kartenaufnahme (4) sich noch auf einer schrägen zu den Kontakten hin verlaufenden Bahn befindet.

4. Chipkartenleser nach einem der vorhergehenden Ansprüche, dadurch gekennzeichnet, daß die Kartenbremse (51) derart ausgebildet ist, daß sie nicht die Kontaktkraft der Kontakte im Kontaktträger vermindert oder aufhebt, zum Beispiel die Karte von den Kontakten wegdrückt.

5. Chipkartenleser nach einem der vorhergehenden Ansprüche, dadurch gekennzeichnet, daß die Kartenbremse (51) um eine Achse senkrecht zur Mittelachse und parallel zur Kartenebene (55) begrenzt drehbar gelagert ist, und daß die Lagerung in Steck- und Ziehrichtung der Karte weitgehend spielfrei ist.

6. Chipkartenleser nach Anspruch 5, dadurch gekennzeichnet, daß der Schwenkbereich der Kartenbremse (51) nach oben und unten durch Anschläge bzw. die Art der Lagerung derart begrenzt ist, daß die Karte stets sicher in die Bremse eintreten kann.

7. Chipkartenleser nach einem der vorhergehenden Ansprüche, dadurch gekennzeichnet, daß Führungsmittel (7, 8) für Kontaktträger (5) und Kartenaufnahme (4) einen waagrechten Führungsteil (Schlitzteil 24) mit daran anschließendem schrägen Führungsteil (Schlitzteil 25) zu den Kontakten hin aufweisen.

8. Chipkartenleser nach Anspruch 7, dadurch gekennzeichnet, daß der schräge Schlitzteil (25) gegenüber dem waagerechten Schlitzteil (24) um etwa 20° abgewinkelt ist.

9. Chipkartenleser nach einem der vorhergehenden Ansprüche, dadurch gekennzeichnet, daß im Kontaktträger Führungsschlitze (7) und an der Kartenaufnahme (4) Führungszapfen (8) (oder umgekehrt) ausgebildet sind, die miteinander durch Einschnappen in Eingriff gebracht werden.

10. Chipkartenleser nach einem oder mehreren der vorhergehenden Ansprüche, dadurch gekennzeichnet, daß nach Erreichen der Lesestellung ein Endlagenschalter betätigt und so das Erreichen diesen Zustandes gemeldet wird und, daß der Endlagenschalter durch die Absenkbewegung der Karte (und nicht deren Längsbewegung) betätigt wird.

11. Chipkartenleser nach Anspruch 10, dadurch gekennzeichnet, daß der Endlagenschalter zwei gleiche Schaltkontaktfedern (20, 21) aufweist, die ähnlich wie die Lesekontakte angeordnet sind.

12. Chipkartenleser nach einem der vorhergehenden Ansprüche, dadurch gekennzeichnet, daß die Schaltkontakte nicht in Richtung der Karteneinschub- oder Herausziehbewegung wirken, sondern in einer die Bremswirkung auf die Karte unterstützenden Richtung.

13. Chipkartenleser nach einem der vorhergehenden Ansprüche, dadurch gekennzeichnet, daß die Schaltkontakte und die sogenannten Lesekontakte jeweils mit Vorspannung im Kontaktträger (5) angeordnet sind.

14. Chipkartenleser nach einem der vorhergehenden Ansprüche, dadurch gekennzeichnet, daß die Kontakte von der Unterseite (117) des Kontaktträgers her eingesetzt und verrastet werden, wobei beim Einsetzen und Einrasten die Vorspannung für die Kontakte erzeugt wird.

15. Chip Karten leser nach einem der vorhergehenden Ansprüche dadurch gekennzeichnet, daß die Bewegung der Karten aufnahme in die besestellung eine Absenkbewegung ist.

16. Chipkartenleser nach einem der vorhergehenden Ansprüche, dadurch gekennzeichnet, daß eine Rückholfeder (12) ein im Normalzustand gerader Draht ist, was eine billige Her stellung ermöglicht, der die Karten aufnahme in die Einsetzstellung vorspannt.

17. Chipkartenleser nach einem der vorhergehenden Ansprüche, dadurch gekennzeichnet, daß die am Kontaktträger begrenzt drehbar und spielfrei gelagerte Kartenbremse (51) sich nach der Karte, bei deren Absenkbewegung ausrichtet, wobei ein geeigneter Einlaufwinkel der die Kartenbremse vorzugsweise bildenden Metallklammer sicherstellt, daß die Chipkarte unabhängig von der Einbaulage des Lesers in den Fangbereich der Kartenbremse gelangt, so daß sich die Kartenbremse kräfteneutral verhält, also weder Schalt- noch Lesekontakte bzw. die Schaltfolge beeinflußt.

## Claims

1. A chip card reader (1) comprising a contact support (5) and a card receiving means (4), which is reciprocally mounted in said contact support (5) such that when a chip card (2) is inserted into said card receiving means (4), said card receiving means (4) is moved together with the chip card (2) downwardly and upwardly, respectively, towards the contact elements provided in said contact support, that a card brake (51) is provided which comes directly into engagement with said card and holds the card in the reading position, characterized in that said brake is movably in particular, pivotally mounted at said contact support such that the brake can follow the movement of the chip card (2) so as to avoid having the chip card (2) pushed out of its position with respect to said contact elements.

2. The chip card reader (1) of claim 1 characterized in that it operates according to the push-pull-principle or, more precisely, according to the push-pull-rest-principle.

3. The chip card reader of claims 1 or 2 characterized in that the card (2) which is being moved towards the stationary contacts in said contact support reaches its reading position while said card together with said card receiving means (4) is still located on an inclined path leading towards said contact elements.

4. The chip card reader according to any of the preceeding claims characterized in that said card brake (51) is designed such that it does not decrease or balance the contact forces of said contact elements, for instance, the card brake does not push the card away from said contact elements.

5. The chip card reader according to any of the preceeding claims characterized in that the card brake (51) is in a limited manner rotatably mounted about an axis perpendicular to the center axis of the reader and parallel to the plane (55) of the card, and that the mounting of the brake is such that it is largely free of play in the direction of push and pull of the card.

6. The chip card reader according to claim 5 characterized in that the range of pivotal movement of said card brake (51) in upward and downward direction is limited by abutments or by the kind of mounting such that the card can always safely enter said brake.

7. The chip card reader according to any of the preceeding claims characterized in that guide means (7, 8) comprise for the contact support (5) and the card receiving means (4) a horizontal guide member (slot portion 24) with an adjacent inclined guide member (slot portion 25) leading towards the contact elements.

8. The chip card reader according to claim 7 characterized in that said inclined slot portion (25) extends with respect to the horizontal slot portion (24) by an angle of 20°.

9. The chip card reader according to any of the preceeding claims characterized in that the contact support is provided with guide slots (7) and the card receiving means (4) is provided with guide pins (8) (or the other way round), said elements being brought in engagement with each other by snapping action.

10. The chip card reader as set forth in one or more of the preceeding claims characterized in that after reaching the reading position an end position switch is actuated to supply information about the reaching of said condition, and that the end position switch is actuated by the downward movement of the card (and not the longitudinal movement) of the card.

11. The chip card reader as set forth in claim 10 characterized in that the end position switch comprises two similar switching contact springs (20, 21) which are mounted in a similar manner to the reading contacts.

12. The chip card reader according to any of the preceeding claims characterized in that the switching contacts do not act in the direction of the insertion or the removal of the card but in a direction supporting the brake action onto the card.

13. The chip card reader according to any of the preceeding claims characterized in that the switching contacts and the so-called reading contacts are each arranged in said contact support (5) with bias.

14. The chip card reader according to any of the preceeding claims characterized in that the contact elements are inserted into the contact support from the bottom side (117) and are located therein by detent or locking means, such that during the insertion and the locking or detent operation the biasing of the contacts is created.

15. The chip card reader of one of the preceeding claims characterized in that the movement of the card receiving means into the reading position is a downward movement.

16. The chip card reader according to any of the preceeding claims characterized in that a return spring (12) is a wire which is in its normal position a straight wire which can be cheaply manufactured, and which biases said card receiving means into the insert position.

17. The chip card reader according to any of the preceeding claims characterized in that the card brake is rotatably mounted at said contact support in a limited manner, is further free of play and alignes itself during the downward movement of the card so as to provide a suitable angle of insertion for the card brake which is preferably a metal clamp, and that the chip card will reach - independently of the position of installment of the reader - the catching range of the card brake so that the card brake is neutral with respect to the existing forces, i. e. the brake neither influences the switching contacts nor the reading contacts nor the sequence of the switching operations.

## Revendications

1. Lecteur (1) de cartes à puce, comprenant un porte-contacts (5) ainsi qu'une réception de carte (4) montée mobile en va-et-vient dans le porte-contacts (5), de manière qu'à l'insertion d'une carte à puce (2) dans la réception de carte (4), celle-ci soit déplacée ensemble avec la carte (2) vers les contacts présents dans le porte-contacts, avec abaissement ou soulèvement, ainsi qu'un frein de carte (51) qui vient directement en prise avec la carte et la maintient à la position de lecture, caractérisé en ce que le frein est monté mobile sur le porte-contacts, en particulier par basculement, de manière qu'il suive le mouvement de la carte à puce (2), afin que la carte à puce (2) ne soit pas poussée hors de sa position par rapport aux contacts.

2. Lecteur (1) de cartes à puce selon la revendication 1, caractérisé en ce qu'il fonctionne suivant le principe "push-pull", plus exactement suivant le principe "push-pull-séjour".

3. Lecteur de cartes à puce selon la revendication 1 ou 2, caractérisé en ce que la carte (2), approchée des contacts fixes dans le porte-contacts, atteint la position de lecture pendant que la carte, ensemble avec la réception de carte (4), se trouve encore sur un trajet incliné s'étendant vers les contacts.

4. Lecteur de cartes à puce selon une des revendications précédentes, caractérisé en ce que le frein de carte (51) est réalisé de manière qu'il ne diminue ou ne supprime pas la force de contact des contacts prévus dans le porte-contacts, par exemple en repoussant la carte dans le sens de son éloignement des contacts.

5. Lecteur de cartes à puce selon une des revendications précédentes, caractérisé en ce que le frein de carte (51) est monté rotatif ou basculant autour d'un axe perpendiculaire à l'axe médian et parallèle au plan de la carte (55), et que le montage mobile dans la direction d'insertion et d'extraction de la carte est pratiquement sans jeu.

6. Lecteur de cartes à puce selon la revendication 5, caractérisé en ce que la plage de basculement du frein de carte (51) vers le haut et le bas est limitée, par des butées ou par la nature du montage, de manière que la carte puisse toujours pénétrer de façon sûre dans le frein.

7. Lecteur de cartes à puce selon une des revendications précédentes, caractérisé en ce que des moyens de guidage (7, 8) pour le porte-contacts (5) et la réception de carte (4) présentent une partie de guidage horizontale (portion de fente 24) et, à sa suite, une partie de guidage oblique (portion de fente 25) vers les contacts.

8. Lecteur de cartes à puce selon la revendication 7, caractérisé en ce que la portion de fente oblique (25) forme un angle d'environ 20° avec la portion de fente horizontale (24).

9. Lecteur de cartes à puce selon une des revendications précédentes, caractérisé en ce que des fentes de guidage (7) sont formées dans le porte-contacts et des ergots de guidage (8) sont formés sur la réception de carte (4) (ou inversement), fentes et ergots qui peuvent être amenés en prise mutuelle par encliquetage.

10. Lecteur de cartes à puce selon une ou plusieurs des revendications précédentes, caractérisé en ce que, après que la position de lecture a été atteinte, un interrupteur de fin de course est actionné pour signaler ainsi que cet état est atteint, et que l'interrupteur de fin de course est actionné par le mouvement d'abaissement de la carte (et non pas par son mouvement longitudinal).

11. Lecteur de cartes à puce selon la revendication 10, caractérisé en ce que l'interrupteur de fin de course comporte deux lames de contact de commutation (20, 21) agissant comme des ressorts et qui sont disposées comme les contacts de lecture.

12. Lecteur de cartes à puce selon une des revendications précédentes, caractérisé en ce que les contacts de commutation n'agissent pas en direction du mouvement d'insertion ou d'extraction de la carte, mais dans une direction soutenant l'effet de freinage exercé sur la carte.

13. Lecteur de cartes à puce selon une des revendications précédentes, caractérisé en ce que les contacts de commutation et les contacts appelés contacts de lecture sont disposés avec précontrainte dans le porte-contacts (5).

14. Lecteur de cartes à puce selon une des revendications précédentes, caractérisé en ce que les contacts sont mis en place et verrouillés depuis la face inférieure (117) du porte-contacts, la précontrainte des contacts étant produite lors de la mise en place et de l'encliquetage.

15. Lecteur de cartes à puce selon une des revendications précédentes, caractérisé en ce que le mouvement de la réception de carte à la position de lecture est un mouvement d'abaissement.

16. Lecteur de cartes à puce selon une des revendications précédentes, caractérisé en ce qu'il comprend un ressort de rappel (12), produisant une précontrainte sur la réception de carte à la position d'insertion et constitué par un fil droit à l'état détendu, ce qui permet une fabrication peu coûteuse.

17. Lecteur de cartes à puce selon une des revendications précédentes, caractérisé en ce que le frein de carte (51), monté de façon à pouvoir tourner ou basculer dans une mesure limitée et sans jeu sur le porte-contacts, s'oriente suivant la carte, lors du mouvement d'abaissement de celle-ci, pendant qu'un angle d'entrée adéquat d'une pince métallique, formant de préférence le frein de carte, assure que la carte à puce entre dans la zone de capture du frein de carte indépendamment de la position de montage du lecteur, de sorte que le frein de carte se comporte de façon neutre quant aux forces exercées, en ce sens qu'il n'influence pas les contacts de commutation ou les contacts de lecture, ni l'ordre de succession des manoeuvres des contacts.
